# FASCICULE DE BREVET EUROPEEN

(11) **EP 2 209 370 B1**
(45) Date de publication et mention de la délivrance du brevet: **11.01.2017**
(21) Numéro de dépôt: 08855427.4
(22) Date de dépôt: 10.11.2008
(51) Int. Cl.: A01N 25/04, A01N 25/30, A01N 35/06, A01N 65/00, A01P 3/00

(54) **UTILISATION D'UNE EMULSION D'HUILE DE MENTHE OU DE L-CARVONE POUR LE TRAITEMENT FONGICIDE DES FRUITS, LEGUMES OU PLANTES**
VERWENDUNG EINER EMULSION VON MINZEÖL ODER VON L-CARVON FÜR DIE FUNGIZIDE BEHANDLUNG VON FRÜCHTEN, GEMÜSE ODER PFLANZEN
USE OF AN EMULSION OF MINT OIL OR OF L-CARVONE FOR THE FUNGICIDAL TREATMENT OF FRUIT, VEGETABLES OR PLANTS

(30) Priorité: 09.11.2007 FR 0758917
(43) Date de publication de la demande: 28.07.2010
(73) Titulaire: XEDA INTERNATIONAL, 13670 Saint-Andiol (FR)
(72) Inventeur: SARDO, Alberto, 13160 Chateaurenard (FR)
(74) Mandataire: Lavoix
(86) Numéro de dépôt international: PCT/FR2008/052021
(87) Numéro de publication internationale: WO 2009/068802

(56) Documents cités:
- EP-A- 0 972 450
- WO-A-2004/091301
- US-B1- 6 548 085

## Description

La présente invention concerne une méthode de traitement fongicide de cultures agricole pour décontaminer ou inhiber la contamination par un champignon.

Les cultures agricoles sont soumises aux attaques de champignons, sur champ ou encore pendant leur stockage après récolte. Il en est notamment ainsi de la pomme de terre qui peut être attaquée par le champignon *Rhizoctonia solani.* Celui-ci provoque un rhizoctone brun et se développe à partir des sclérotes noirs fixés sur le tubercule mère ou présents dans le sol. Les tubercules issus de plans atteints sont petits, difformes et anguleux. La contamination par *Rhizoctonia solani* se fait généralement dans le champ et se développe au cours du stockage. Il est donc important de pouvoir mettre en oeuvre un traitement fongicide sur champ et après récolte.

La pomme de terre est également sujette à la gale argentée (*Helminthosporium solani*). Les *Phytophtorae* sont également très répandus comme le mildiou du chou, de la laitue, de l'endive et du fraisier (*Peronospora Brassicae*).

Il est donc désirable de mettre à disposition de nouveaux traitements fongicides améliorés, notamment d'origine naturelle, sans danger pour les consommateurs.

L'utilisation de la L-carvone pour le traitement anti-germinatif des pommes de terre a été décrit (voir notamment la demande EP 0 719 499). Par ailleurs, l'activité fongicide de la L-carvone *in vitro* a également été décrite par Goris et al., Brighton Crop Protection Conférence, Pest and Disease, 1994, 307-312). Néanmoins, cet article ne décrit que les tests expérimentaux à l'échelle du laboratoire difficilement prédictifs à l'échelle industrielle. Par ailleurs, l'huile essentielle de menthe est utilisée pure, par évaporation et cet article ne suggère aucunement des compositions de formulation améliorée.

Il est donc désirable de mettre à disposition de nouvelles formulations d'huile de menthe ou de L-carvone pour mettre en oeuvre le procédé fongicide des cultures.

Ainsi, les présents inventeurs ont mis au point une formulation de L-carvone ou d'huile de menthe en émulsion, en présence de lécithine et/ou dérivés.

Selon un premier objet, la présente invention concerne donc un procédé de traitement fongicide des cultures comprenant l'application d'huile de menthe et/ou L-carvone en émulsion dans l'eau.

Préférentiellement, ledit traitement est effectué à température ambiante.

Préférentiellement, ladite émulsion comprend un ou plusieurs lécithine et/ou dérivés.

Selon un aspect avantageux, le procédé selon l'invention vise la décontamination ou la prévention de la contamination par des rhizoctones tel que *Rhizoctonia solani* ou le mildiou. Préférentiellement, le parasite du mildiou est un *Phytophtora* ou *Peronospora,* tel que *Phytophtora Infestans* ou *Peronospora Brassicae.*

Le procédé selon l'invention est particulièrement avantageux pour le traitement fongicide de la pomme de terre, le chou, la chicorée, le fraisier.

Généralement, ladite composition peut être appliquée par tout moyen, connu en soi, notamment par aspersion ou par les eaux d'irrigation, sur champ ou au cours du stockage sur les fruits, légumes, bulbes ou tubercules récoltés.

Le procédé selon l'invention comprend les étapes consistant à :
i. diluer une formulation concentrée émulsifiable de L-carvone et/ou huile de menthe dans de l'eau,
   et
ii. appliquer l'émulsion ainsi obtenue sur les cultures agricoles à traiter.

Préférentiellement, ladite formulation concentrée émulsifiable peut être diluée dans l'eau selon un rapport compris entre environ 1% et 90%, par exemple dans les eaux d'irrigation. La concentration dépend des plantes à traiter ainsi que du degré de l'attaque fongicide. Ces ajustements font partie des opérations de routine habituellement mises en oeuvre. Ainsi par exemple, sur les cultures sensibles à la phytotoxicité (chou, fraisier), on préfère mettre en oeuvre des émulsions diluées à 30-90%. Pour les espèces plus résistantes (pommes de terre, chicorée), une concentration comprise entre 1 et 30% peut suffire.

Il est également possible d'ajuster la concentration de lécithine et/ou dérivés pour diminuer la phytotoxicité des compositions fongicides, en jouant sur le rapport lécithine/L-carvone. En effet, et ce de façon remarquable, la lécithine et/ou dérivés diminue la phytotoxicité des terpènes.

Selon un autre objet, la présente invention concerne également une formulation concentrée émulsifiable comprenant
- de 5% à 80% d'huile de menthe et/ou L-carvone ;
- de 2% à 70% de lécithine(s) et/ou dérivé(s) ;
- de 0% à 40% d'huile(s) végétale(s) ;
- de 0% à 40% de tensioactif(s) non ionique(s) ;
- de 0% à 40% d'autre(s) terpène(s).

Selon un premier mode de réalisation, le rapport en poids lécithine(s) et/ou dérivé(s)/huile de menthe et/ou L-carvone est supérieur ou égal à 1, en poids.

Ainsi, ladite formulation comprend :
- de 10% à 70% de lécithine de soja ;
- de 5% à 40% d'huile de menthe et/ou L-carvone ;
- de 0% à 40% d'huile(s) végétale(s) ;
- de 0% à 40% de tensioactif(s) non ionique(s) ;
- de 0% à 40% d'autre(s) terpène(s) ;
et plus préférentiellement :
- environ 20% d'huile de menthe et/ou de L-carvone
- environ 40% de lécithine de soja ;
- environ 20% d'huile végétale ;
- environ 20% de tensioactifs non ioniques ; et/ou
- environ 0% d'autre terpène.

Selon un autre mode de réalisation, ladite formulation est telle que le rapport lécithine(s) et/ou dérivé(s) /huile de menthe et/ou L-carvone, en poids, est inférieur à 1.

Ladite formulation comprend alors:
- de 2% à 40% de lécithine(s) et/ou dérivé(s);
- de 10% à 80% d'huile de menthe et/ou L-carvone;
- de 0% à 40% d'huile(s) végétale(s) ;
- de 0% à 40% de tensioactif(s) non ionique(s) ; et
- de 0% à 40% d'autre(s) terpène(s) ;
et plus préférentiellement :
- environ 20% de lécithine(s) et/ou dérivé(s);
- environ 45% d'huile de menthe et/ou L-carvone;
- environ 15% d'huile(s) végétale(s) ;
- environ 20% de tensioactif(s) non ionique(s) ;
- 0% d'autre terpène.

Généralement, le(s)dit(s) tensioactif(s) non ionique(s) est(sont) de type acide oléique éthoxylé.

Avantageusement, le(s)dit(s) lécithine(s) et/ou dérivé(s) est(sont) choisi(s) parmi les lécithines d'origine naturelle (oeuf, soja) éventuellement hydrolysé(s).

Selon un autre objet, la présente invention concerne également le procédé de traitement fongicide de cultures agricoles comprenant l'application d'une formulation concentrée émulsifiable telle que définie ci-avant.

Généralement, on applique un litre de formulation pour une tonne de plantes.

La carvone désigne le 2-méthyl-5-(1-méthyléthényl)-2-cyclohexène-1-one. A la différence de la D-carvone, dont la source naturelle principale est le cumin, et des autres monoterpènes oxygénés, la L-carvone est un composé naturellement ingéré en grandes quantités dans l'alimentation humaine, par exemple lors de la consommation de certains plats à base de menthe ou lors de la mastication de chewing gum, sa source naturelle principale étant la menthe commune ou *Mentha spicata.* La L-carvone peut être obtenue à partir de sources naturelles, notamment la menthe commune (*Mentha spicata*) ou par voie de synthèse à partir du limonène. La mise au point d'une méthode de traitement fongicide efficace utilisant comme matière active un produit consommé de façon courante dans l'alimentation répond aux besoins actuels de traitements non toxiques.

On entend par "cultures agricoles" les plantes ou produits de plantes pour consommation, notamment les fruits, légumes, bulbes et tubercules.

L'expression "traitement fongicide" vise la décontamination ou la prévention de la contamination par des champignons, notamment le mildiou. Le mildiou est le nom générique d'une série de maladies des plantes causées par des champignons. On donne le nom de *mildiou* aux parasites suivants : *Plasmopara viticola* qui attaque la vigne, *Plasmopara helianthi* (mildiou du tournesol), *Phytophthora infestans* qui touche la pomme de terre, *Phytophthora cactorum* (ou *fragariae*) qui s'attaque au fraisier, *Phytophthora capsici* (mildiou du poivron), *Peronospora brassicae* (chou), *Peronospora destructor* (oignon, ail), *Hyaloperonospora parasitica* (crucifères telles que le chou), *Peronospora pisi* (pois fourrager ou potager), *Peronospora spinaciae* (épinard), *Peronospora tabacina* (tabac), *Pseudoperonospora cubensis* (mildiou des cucurbitacées), *Pseudoperonospora humuli* (mildiou du houblon), *Bremia lactucae,* qui s'attaque à la laitue et à l'artichaut.

Les tensioactifs ou émulsifiants variés sont connus en soi. Selon la présente invention, on entend par tensioactif tout type d'agent habituellement utilisé comme émulsifiant, tels que les acides gras éthoxylés, les alcools gras éthoxylés, les alcools à longues chaînes éthoxylés, les alkylphénols éthoxylés ou tout autre produit non ionique. Des exemples de tensioactifs non ioniques utilisables selon l'invention sont notamment le produit de condensation d'un alcool gras aliphatique, de préférence en C₈-C₂₂, avec un oxyde d'alkylène en C₂-C₃. L'oxyde d'alkylène en C₂-C₃ peut être l'oxyde d'éthylène, l'oxyde de propylène ou bien un mélange d'oxyde d'éthylène et d'oxyde de propylène dans des proportions quelconques. Un exemple de tels tensioactifs est le produit de condensation de l'acide laurique (ou alcool n-dodécyclique) avec 30 mol d'oxyde d'éthylène.

Les tensioactifs selon l'invention peuvent également contenir d'autres agents habituellement utilisés dans le traitement des fruits, légumes ou tubercules. Les tensioactifs non ioniques incluent notamment les sucro-esters, les sorbitans monoléates éthoxylés, les acides gras éthoxylés, les acides gras estérifiés tels que l'oléate de glycérol et leurs mélanges, les alcools gras éthoxylés, les alcools gras éthoxylés.

A titre de terpènes, tous les terpènes peuvent convenir, préférentiellement les terpènes non porteurs d'oxygène, tels que les pinènes et le limonène, plus particulièrement le limonène.

A titre d'huile végétale, on peut notamment citer les huiles de consommation telles que l'huile de tournesol, l'huile de maïs, l'huile d'arachide ou l'huile d'olive.

Les lécithines sont des mélanges de combinaisons d'esters des acides oléique, stéarique, palmitique avec l'acide glycérophosphorique et la choline. On entendu par "lécithine" les lécithines et/ou leurs dérivés. Cette expression comprend un ou plusieurs composés choisis parmi les composés distéaryl, palmityl et/ou oléyl de phosphatidylcholine et/ou leurs dérivés tels que le phosphatidylinositol, phosphatidyl thanolamine et/ou acide phosphatidique et /ou leurs mélanges. Préférentiellement, les lécithines et/ou dérivés sont d'origine naturelle tel que, par exemple, issus du jaune d'oeuf, E322 ou du soja (lécithine de soja). Les dérivés de lécithine incluent notamment les lysolécithines et/ou dérivés : ces composés résultent de l'élimination d'un acide gras des lécithines et/ou dérivés mentionnés plus haut, tels que l'Emultop HL50®, commercialisé par Degussa. Les lécithines et/ou dérivés contenant au moins un lysolécithine et/ou dérivé sont solubles dans les huiles d'origine végétale : ainsi, les compositions selon l'invention permettent d'employer uniquement des produits d'origine naturelle.

La présence de lécithines est particulièrement avantageuse en ce qu'elle permet de limiter l'évaporation de la matière active.

Les compositions sont préparées par mélange de leurs composants selon un procédé connu en soi. Pour mettre en oeuvre le procédé selon l'invention, la composition peut être appliquée à température comprise entre 15° et 45°, de préférence à température ambiante.

Les exemples suivants sont donnés à titre illustratif de la présente invention.

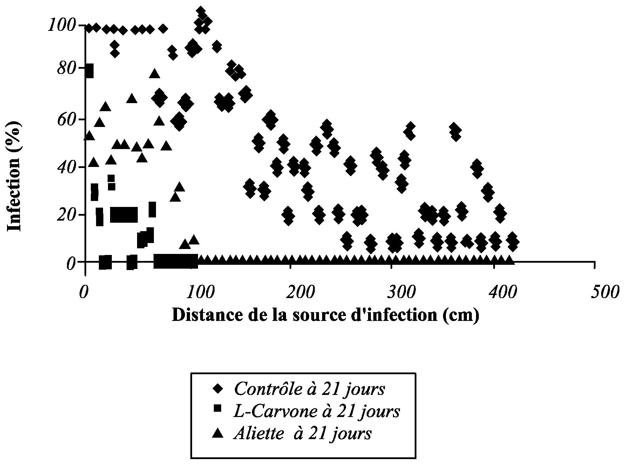

La Figure 1 représente l'efficacité de la L-carvone sur l'infection du mildiou du chou.

### Exemples

### Effet de la L-carvone sur le mildiou du chou

Des choux ont été infectés par *Peronospora Brassicae* (mildiou du chou) puis traités rapidement après inoculation par de la L-carvone ou de l'aliette.

La L-carvone, appliquée à une concentration minimale de 1%, a été en mesure de contrôler efficacement l'infection durant 21 jours, à la différence de l'aliette, tel que cela apparaît de la figure 1.

## Revendications

1. Procédé de traitement fongicide de cultures agricoles ou produits de cultures agricoles comprenant l'application d'une émulsion comprenant de l'huile de menthe et/ou de la L-carvone dans l'eau, à température ambiante.

2. Procédé selon la revendication 1 tel que ladite émulsion comprend en outre un ou plusieurs lécithine(s) et/ou dérivé(s).

3. Procédé selon l'une quelconque des revendications précédentes tel que ledit traitement fongicide comprend la décontamination ou la prévention de la contamination par un rhizoctone ou un mildiou.

4. Procédé selon l'une quelconque des revendications précédentes tel que ladite composition est appliquée par aspersion ou par les eaux d'irrigation.

5. Procédé selon l'une quelconque des revendications précédentes tel que le procédé est mis en oeuvre sur champ.

6. Procédé selon l'une quelconque des revendications précédentes tel que ledit traitement est mis en oeuvre au cours du stockage sur les fruits, légumes, bulbes ou tubercules récoltés.

7. Procédé selon l'une quelconque des revendications précédentes tel que ledit procédé comprend les étapes consistant à :
i. diluer une formulation concentrée émulsifiable selon l'une quelconque des revendications 8 à 14 dans de l'eau
et
ii. appliquer l'émulsion ainsi obtenue sur les cultures à traiter.

8. Formulation concentrée émulsifiable comprenant :
- de 5% à 80% d'huile de menthe et/ou L-carvone ;
- de 2% à 70% de lécithine(s) et/ou dérivé(s) ;
- de 0% à 40% d'huile(s) végétale(s) ;
- de 0% à 40% de tensioactif(s) non ionique(s) ;
- de 0% à 40% d'autre(s) terpène(s).

9. Formulation selon la revendication 8 tel que le rapport en poids lécithine(s) et/ou dérivé(s)/huile de menthe et/ou L-carvone est supérieur ou égal à 1.

10. Formulation selon la revendication 8 ou 9 telle qu'elle comprend :
- environ 20% d'huile de menthe et/ou de L-carvone ;
- environ 40% de lécithine de soja ;
- environ 20% d'huile végétale ;
- environ 20% de tensioactifs non ioniques ; et/ou
- environ 0% d'autre terpène.

11. Formulation selon la revendication 8 telle que le rapport lécithine(s) et/ou dérivé(s) /huile de menthe et/ou L-carvone, en poids, est inférieur à 1.

12. Formulation selon la revendication 8 ou 11, comprenant :
- environ 20% de lécithine(s) et/ou dérivé(s);
- environ 45% d'huile de menthe et/ou L-carvone;
- environ 15% d'huile(s) végétale(s) ;
- environ 20% de tensioactif(s) non ionique(s) ;
- 0% d'autre terpène.

13. Formulation selon l'une quelconque des revendications 8 à 12 telle le(s)dit(s) tensioactif(s) non ionique(s) est(sont) de type acide oléique éthoxylé.

14. Formulation selon l'une quelconque des revendications 8 à 13 telle que le(s)dit(s) lécithine(s) et/ou dérivé(s) est(sont) choisi(s) parmi les lécithines d'origine naturelle éventuellement hydrolysé(s).

15. Procédé de traitement fongicide de cultures agricoles ou produits de cultures agricoles comprenant l'application d'une formulation concentrée émulsifiable selon l'une quelconque des revendications 8 à 14.

## Patentansprüche

1. Verfahren zur fungiziden Behandlung von landwirtschaftlichen Kulturen oder Produkten landwirtschaftlicher Kulturen, umfassend das Aufbringen einer Emulsion umfassend Minzöl und/oder L-Carvon in Wasser, bei Raumtemperatur.

2. Verfahren gemäß Anspruch 1, wobei die Emulsion des Weiteren ein oder mehrere Lecithin(e) und/oder Derivat(e) umfasst.

3. Verfahren gemäß einem der voranstehenden Ansprüche, wobei die fungizide Behandlung die Dekontamination oder die Prävention der Kontamination durch eine Rhizoctonia oder einen falschen Mehltau umfasst.

4. Verfahren gemäß einem der voranstehenden Ansprüche, wobei die Zusammensetzung mittels Besprühen oder mittels Bewässerungswasser aufgebracht wird.

5. Verfahren gemäß einem der voranstehenden Ansprüche, wobei das Verfahren auf dem Feld durchgeführt wird.

6. Verfahren gemäß einem der voranstehenden Ansprüche, wobei die Behandlung während des Lagerns auf die geernteten Früchte, Gemüse, Zweibelknollen oder Hackfrüchte erfolgt.

7. Verfahren gemäß einem der voranstehenden Ansprüche, wobei das Verfahren die Schritte bestehend aus:
i. Verdünnen einer emulgierbaren, konzentrierten Formulierung gemäß einem der Ansprüche 8 bis 14 in Wasser
und
ii. Aufbringen der so erhaltenen Emulsion auf die zu behandelnden Kulturen umfasst.

8. Emulgierbare, konzentrierte Formulierung umfassend:
- von 5 % bis 80 % Minzöl und/oder L-Carvon;
- von 2 % bis 70 % Lecithin(e) oder Derivat(e);
- von 0 % bis 40 % Pflanzenöl(e);
- von 0 % bis 40 % nicht-ionische(s) Tensid(e);
- von 0 % bis 40 % anderes/r Terpen(e).

9. Formulierung gemäß Anspruch 8, wobei das Gewichtsverhältnis von Lecithin(en) und/oder Derivate(en)/Minzöl und/oder L-Carvon größer als oder gleich 1 ist.

10. Formulierung gemäß Anspruch 8 oder 9, wobei sie umfasst:
- ungefähr 20 % Minzöl und/oder L-Carvon;
- ungefähr 40 % Soja-Lecithin;
- ungefähr 20 % Pflanzenöl;
- ungefähr 20 % nicht-ionische Tenside; und/oder
- ungefähr 0 % anderes Terpen.

11. Formulierung gemäß Anspruch 8, wobei das Gewichtsverhältnis von Lecithin(en) und/oder Derivate(en)/Minzöl und/oder L-Carvon kleiner als 1 ist.

12. Formulierung gemäß Anspruch 8 oder 11, umfassend:
- ungefähr 20 % Lecithin(e) oder Derivat(e);
- ungefähr 45 % Minzöl und/oder L-Carvon;
- ungefähr 15 % Pflanzenöl(e);
- ungefähr 20 % nicht-ionische(s) Tensid(e); und/oder
- 0 % anderes Terpen.

13. Formulierung gemäß einem der Ansprüche 8 bis 12, wobei das/die nicht-ionische(n) Tensid(e) vom Typ ethoxylierte Ölsäure ist/sind.

14. Formulierung gemäß einem der Ansprüche 8 bis 13, wobei das/die Lecithin(e) und/oder Derivat(e) ausgewählt sind aus Lecithinen natürlicher Herkunft, eventuell hydrolysiert.

15. Verfahren zur fungiziden Behandlung landwirtschaftlicher Kulturen oder Produkten landwirtschaftlicher Kulturen, umfassend das Aufbringen einer emulgierbaren, konzentrierten Formulierung gemäß einem der Ansprüche 8 bis 14.

## Claims

1. Method for the fungicidal treatment of field crops or products of field crops, comprising the application of an emulsion comprising mint oil and/or L-carvone in water, at ambient temperature.

2. Method according to either claim 1 , **characterised in that** said emulsion further comprises one or more lecithins and/or derivatives.

3. Method according to any one of the preceding claims, **characterised in that** said fungicidal treatment comprises decontamination from or prevention of contamination by a rhizoctonia or mildew.

4. Method according to any one of the preceding claims, **characterised in that** said composition is applied by spraying or via irrigation water.

5. Method according to any one of the preceding claims, **characterised in that** the method is carried out in the fields.

6. Method according to any one of the preceding claims, **characterised in that** said treatment is carried out on harvested fruit, vegetables, bulbs or tubers during storage.

7. Method according to any one of the preceding claims, **characterised in that** said method comprises the steps of:
i. diluting the concentrated emulsifiable formulation according to any one of claims 15 to 23 in water
and
ii. applying the emulsion thus obtained to the field crops to be treated.

8. Concentrated emulsifiable formulation, comprising:
- 5 % to 80 % mint oil and/or L-carvone;
- 2 % to 70 % lecithin(s) or derivative(s);
- 0 % to 40 % vegetable oil(s);
- 0 % to 40 % non-ionic surfactant(s);
- 0 % to 40 % other terpene(s).

9. Formulation according to claim 8, **characterised in that** the ratio by weight of lecithin(s) and/or derivative(s) to mint oil and/or L-carvone is greater than or equal to 1.

10. Formulation according to claim 8 or claim 9, **characterised in that** it comprises:
- approximately 20 % mint oil and/or L-carvone;
- approximately 40 % soy lecithin;
- approximately 20 % vegetable oil;
- approximately 20 % non-ionic surfactants; and/or
- approximately 0 % other terpenes.

11. Formulation according to claim 8, **characterised in that** the ratio of lecithin(s) and/or derivative(s) to mint oil and/or L-carvone by weight is less than 1.

12. Formulation according to claim 8 or claim 11, comprising:
- approximately 20 % lecithin(s) and/or derivative(s);
- approximately 45 % mint oil and/or L-carvone;
- approximately 15 % vegetable oil(s);
- approximately 20 % non-ionic surfactant(s);
- approximately 0 % other terpenes.

13. Formulation according to any one of claims 8 to 12, **characterised in that** said non-ionic surfactant(s) is(are) of the ethoxylated oleic acid type.

14. Formulation according to any one of claims 8 to 13, **characterised in that** said lecithin(s) and/or derivative(s) is(are) selected from lecithins of natural origin, optionally hydrolysed.

15. Method for the fungicidal treatment of field crops or products of field crops, comprising the application of a concentrated emulsifiable formulation according to any one of claims 8 to 14.
